# EUROPEAN PATENT SPECIFICATION

(11) **EP 2 161 981 B1**
(45) Date of publication and mention of the grant of the patent: **23.09.2015**
(21) Application number: 08762378.1
(22) Date of filing: 16.06.2008
(51) Int. Cl.: A01G 1/00, E01C 13/08

(54) **SURFACES FOR SPORTING AND OTHER ACTIVITIES**
OBERFLÄCHEN FÜR SPORT UND ANDERE AKTIVITÄTEN
SURFACES POUR PRATIQUER UN SPORT ET D'AUTRES ACTIVITÉS

(30) Priority: 16.06.2007 GB 0711679
(43) Date of publication of application: 17.03.2010
(73) Proprietor: Mansfield Sand Company Limited, Mansfield, NG18 4BE (GB)
(72) Inventor: ARMOND, Victor, John, Notts NG23 6ER (GB)
(74) Representative: Potter Clarkson LLP
(86) International application number: PCT/GB2008/002052
(87) International publication number: WO 2008/155528

(56) References cited:
- EP-A- 0 204 381
- EP-A- 0 403 008
- GB-A- 2 274 997
- US-A- 5 507 845

## Description

### Field of the Invention

The present invention relates to surfaces for sporting and other activities, to growing media for such surfaces, and to methods for forming such surfaces; which surfaces are particularly suitable for equestrian usage, for ball games, such as football and golf, and other leisure activities.

### Background of the Invention

During a soccer or rugby season, pitches are subjected to sustained and intensive usage, often when weather conditions are bad and do not allow much opportunity for the grass medium to recover or be repaired.

Also pitches may be subjected to extreme weather conditions including flooding, frost and ice.

Damage to the turf and soil structure caused by normal usage is intensive and the scale of damage can exceed the rate of such recovery, especially in areas such as goal mouths and centre circles of football pitches, or on golf tees where the turf can be totally destroyed and the soil severely compacted. In wet weather, this results in mud; in dry weather, the surface can be hard and bumpy.

Poor surface conditions increase the occurrence of poor player performance and player injury.

Various artificial surfaces have been used as an alternative to grass. One surface, commonly known as hard porous, has water bound grit/sand/clay mixtures of differing proportions with a drainage layer of coarser material. This surface provides inadequate cushioning and is too abrasive. The surface material also becomes destructured and so loses permeability. In the dry weather dust is a problem.

Another artificial surface has a synthetic material laid on soil or on a drainage layer of sand or other material. This synthetic turf may or may not be infilled by a top dressing of sand. Such a surface is expensive to install and has insufficient resilience for falling players. Maintenance and repairs are difficult and costly.

Another artificial surface has a layer of fibres in a loose pattern, on a bed of sand which itself is on a drainage layer. However, maintenance and repairs are difficult and costly. Play characteristics are poor.

A fourth known surface comprises a layer of sand or granular material bound by bitumastic or similar material. Such a surface has insufficient resilience, is too abrasive and is difficult and costly to repair and maintain.

It can be seen from the above that, where the wear on a playing surface is severe, the tendency has been to move away from grass to synthetic surfaces of various kinds. However, for many reasons, both aesthetic and practical, it would still be preferably to employ a grass surface if its wearing properties could be improved.

UK Patent Specification GB 2 274 997 A describes a surface in which polypropylene fibres are dispersed in a growing material. However the resultant surface is prone to hardness, particularly with inclement weather conditions and without careful and regular maintenance.

Attempts have been made to reduce the hardness of the surface, for example by aeration of the ground mechanically, or by other maintenance. However, such methods are labour-intensive and highly variable in effectiveness.

EP 0 403 008 discloses a foundation for a sports field which in its simplest form consists only of sand having added thereto 2-8% weight of humus material.

EP 0 403 008 teaches that the stability of the foundation may be improved by adding damping, i.e. a resilient material, to the foundation. According to EP 0 403 008 the resilient material can be a synthetic elastomer material, or rubber in the form of rubber fibres or particles.

EP 0 403 008 is, however, entirely silent on the inclusion, additional, in the foundation of substantially rigid, elongate synthetic polymeric fibres.

### Objects of the Invention

An object of the present invention is to provide a surface for sporting and other recreational activities which has reduced hardness, especially in extended adverse weather conditions.

Another object of the present invention is to provide a surface for sporting and other recreational activities which has an improved player-friendly characteristic.

Another object of the present invention is to provide a surface for sporting and other recreational activities which reduces occurrence of poor player performance or player injury due to surface conditions.

Another object of the present invention is to provide a surface for sporting and other recreational activities which achieves any or all of the above objectives, while minimising or eliminating any additional maintenance required.

Another object of the present invention is to provide a surface for sporting and other recreational activities which provides a degree of resilience or elastic characteristic to the surface.

### Summary of the Invention

According to the present invention, there is provided a growing material for a grass surface, which material comprises sand, an organic growth-supporting medium and elongate elastomeric polymer fibres, the growing material being characterised in that it further includes elongate synthetic polymeric substantially rigid fibres, and in that each of the rigid fibres and the elastomeric fibres are randomly dispersed as separate individual fibres in the growing material, the growing material being characterised in that the ratio of elastomeric fibres to rigid polymeric fibres in the growing material is between 12:1 and 8:1.

The growing material may include any one or more of the following features:
- elastane fibres;
- modified polyurethane fibres, e.g. polyurethane/polyethylene glycol;
- polyurethane fibres of a length in the range of 1 to 200mm;
- polyurethane fibres of a length in the range of 5 to 100mm
- elastomeric fibres which are one or more of the following: substantially straight, substantially curved, substantially helical or spiral;
- elastomeric fibres which have one or more bends;
- a plurality of randomly-spaced bends;
- the direction of adjacent bends are randomly arranged;
- elastomeric fibres which are crimped;
- elongate synthetic polymeric substantially rigid fibres, the fibres being randomly dispersed as separate individual fibres in the growing material;
- the rigid synthetic polymeric fibres have a fibre length in the range from 5 to 75mm;
- the rigid fibres have a fibre length in the range from 20 to 400mm;
- the rigid fibres have an average diameter from 50 to 150 denier;
- the rigid synthetic polymeric fibres comprise polypropylene;
- the sand is silica and the sand particles have an average diameter in the range from 100 to 1000 microns;
- organic growth supporting medium is soil, compost or peat, or a mixture thereof;
- a soil conditioner, preferably as seaweed based soil conditioner;
- the layer of growing material is from 50 to 250mm thick;
- an inorganic fertiliser added thereto;
- from 50 to 95% of silica sand by volume of the total growing material;
- from 50 to 95% of sand bonded with water activated clay, by volume of the total growing material;
- the organic growth supporting medium is soil which is present in an amount of from 5 to 50% by volume based on the total volume of the growing material;
- the organic growth supporting medium comprises peat and/or compost which is present in an amount of from 5 to 25% by volume based on the total volume of the growing material;
- a seaweed based soil conditioner in an amount of from 50 to 100g/m², based upon the area of the growing material layer;
- an inorganic fertiliser in an amount of from 10 to 50 kg / 20 tonnes of total growing material by weight;
- the percentage of elastomeric fibres in the growing material is in the range of 0.5 to 6% (preferably 2 to 4%) by weight based on the total weight of the growing material;
- the percentage of rigid fibres in the growing material is in the range of 0.1 to 0.9% (preferably 0.25 to 0.5%) by weight, based upon the total weight of the composition.

The present invention also provides a grass surface in which the grass is grown in a layer of growing material as defined in the present invention.

The grass surface may comprise grass turf combined with the growing material, or it may comprise a combination of the growing medium and grass seeds for germination and/or when germinated.

The present invention also provides a method of forming a grass surface, which comprises sowing grass seed in, or applying turf to, a layer of growing material as defined in the present invention.

The present invention provides a growing material which may have a grass surface with a resilient and/or elastic characteristic to maintain or enhance player performance and reduce player injury.

### Advantages of the Invention

Under the high intensity of wear, the surface of the present invention may provide better grass cover than prior surfaces. There may be an increase in grass cover (1-2%), and this may result from reduced root abrasion when elastomeric polymer fibres are included.

Trials indicate that hardness is greater for the conventional sand-dominant and polypropylene fibre-reinforced surfaces, whereas the addition of the polyurethane fibres significantly lowered surface hardness, with all values falling within the preferred range for natural turf football pitches. An increase in polyurethane fibre resulted in consistently lower hardness values. This is the opposite of the response for polypropylene fibres alone, in which hardness increases as the rate of polypropylene fibres was increased from 0% to 0.75% on a weight basis.

Ball rebound resilience followed a similar pattern to hardness, with the addition of polyurethane fibres significantly reducing ball rebound. The higher the amount of polyurethane fibre, then these resulted in consistently lower ball rebound resilience than the 2.0% rate.

Traction was very good for the reinforced rootzones throughout the trial duration. Under the higher intensity of wear, when grass cover was low, the new surface rootzones had significantly greater traction than the conventional rootzone.

The addition of polyurethane fibres to the rootzone results in a greater cushioning effect at the surface, with hardness and ball rebound resilience values being significantly reduced and falling within the preferred range for natural turf football pitches.

The products of the present invention may retain better and more live grass cover under conditions of high intensity wear. The combination of increased grass cover and the mechanical strength of the fibres results in significantly greater traction properties at the surface, with values within the preferred range for natural turf football pitches.

The present invention includes one or more aspects, embodiments and/or features of said aspects and/or embodiments in isolation and/or in various combinations whether or not specifically stated (including claimed) in that combination or in isolation.

### General Description of the Invention

In order that the present invention may more readily be understood, a description is now given, by way of example only, reference being made to the accompanying drawings in which:-
Figure 1 is a schematic drawing of a soccer surface embodying the present invention;
Figure 2 is a flow diagram of a method of forming the surface of Figure 2;
Figures 3 to 15 are graphs of results of exemplary surfaces embodying the present invention.

### Detailed Implementations of the Invention

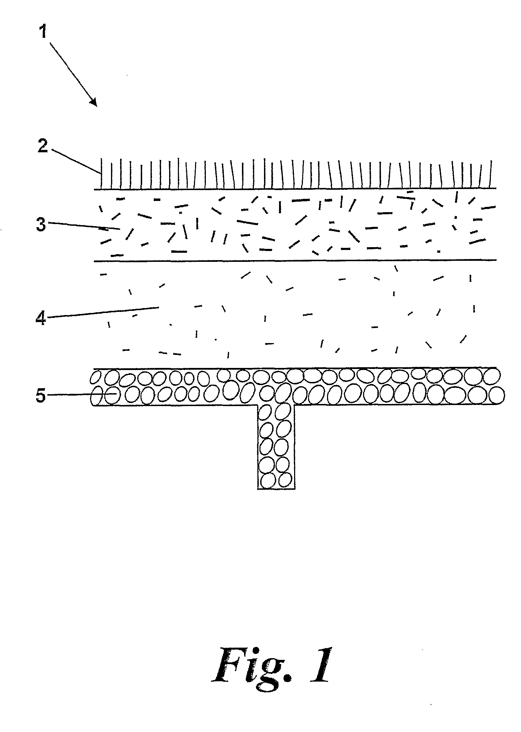

Figure 1 shows the structure of a grass surface 1 on a soccer pitch, the surface 1 formed from a growing material which has the following principal constituents:
- Silica sand with particles of average diameter in the range 100 to 1000 microns;
- Organic growth medium being soil;
- Elongate polyurethane fibres (preferably modified with additives for increased elasticity eg. as marketed by SolTex Global Ltd under the protected trademark Stantane) and/or elastane fibres e.g. as marketed under the trade names Lycra and Dorlastan of average length in the range 1 to 200 mm (preferably 5 to 100 mm);
- Elongate polypropylene fibres of average length in the range of 5 to 75 mm (preferably 20 to 40 mm).

Grass surface 1 has a resilient natural turf top surface 2, under which there is an upper rootzone layer 3 which comprises a polypropylene fibre-reinforced, sand dominant rootzone with elastomeric polyurethane fibres, for example elastane materials.

Below rootzone 3 is another layer being a lower rootzone 4 which is a sand or sand/soil blend, below which there is a layer of graded gravel 5 having a series of channels 6 containing additional gravel for enhancing drainage.

Sand, suitable for use in the present invention, may be silica sand, or a sand bonded with a water activated clay. Sands bonded with an organic liquid activated clay, which are sometimes used for equestrian surfaces, are in general not suitable for use in the present invention.

Silica sand is a sand which is relatively clean, is clay free, and is a well graded sand produced by a wet classification method. Sand bonded with water activated clay is a sand in which the sand particles are coated with a water activated clay which imparts a degree of cohesive strength to the sand, the extent of the cohesive strength being dependent on the relative amounts of clay and water.

Preferably the sand particles have an average diameter in the range of from 100 to 1000 microns.

The organic growth supporting medium may be any suitable particulate or fibrous material which can be penetrated by grass roots, but is preferably soil, compost, peat, or a mixture thereof.

Where soil is used, this is preferably good quality top soil (screened and/or sterilised) from an approved source. Top soil provides a base source of nutrients for the grass and provides moisture retention characteristics.

Compost is preferably from a supplier approved to PAS100 standard. It provides organic matter to improve rootzone structure and water-holding capacity, supplies slow-release turf grass nutrients and beneficial micro-organisms, and imparts a degree of biological disease suppression.

The peat is preferably from an approved source and provides an organic content which acts to retain moisture and provide a source of root promoting bacterial activity in the root zone.

The organic growth supporting medium is preferably supplemented with a soil conditioner such as a seaweed based soil conditioner, for example, Alginure soil improver, which contains an organic colloid capable of aggregating soil and intensifying microbial life as well as providing a supply of trace elements.

The first type of elongate fibres used in the growing material are elongate elastomeric polymer fibres e.g. elastane materials, being polyurethane fibres of length in the range of 1 to 200 mm, advantageously in the range 5 to 100 mm; the fibres have a diameter typically in the range 0.05 to 0.60 mm, advantageously in the range 0.10 to 0.45 mm. The amount of polyurethane fibres in the growing material is 0.5 to 6.0% by weight, advantageously 2.0% to 4.0% by weight.

The polyurethane fibres may have any appropriate shape in the unstressed state prior to and upon mixing with the other constituents of the growing material, for example these fibres may be substantially straight, curved, helical, spiral, with one or more bends (being randomly spaced and the directions of adjacent bends being randomly arranged), crimped, or any combination of these shapes.

While polyurethane fibres are particularly advantageous, other forms of elastomeric polymer fibres may be used, for example unsaturated rubbers cured by sulphur vulcanisation, polyisoprenes, polybutadienes, chloroprenes.

The second type of elongate synthetic fibres used in the growing material preferably comprise fibres of a synthetic polymeric rigid material having good resistance to environmental conditions. Fibres of polyolefins such as polyethylene, polypropylene, polybutene or co-polymers thereof are suitable, together with polyamides such as nylon, halogenated polymers such as PVC, and other similar materials. Advantageously, polypropylene fibres commonly referred to as staple fibre are used, with a fibre length of from 5 to 75mm, preferably from 10 to 75mm, most preferably from 20 to 40mm. The average diameter of the fibres is preferably from 50 to 150 denier, for example about 65 denier.

Preferably the layer of growing material is from 50 to 150mm thick, most preferably from 75 to 150mm thick.

It is highly advisable to add to the layer of growing material a fertiliser at least prior to seeding or planting and at regular intervals thereafter. An inorganic fertiliser comprising a balanced supply of nitrogen, phosphorus and potassium (N, P and K) may be added to the root zone, and for example a typical pre-seeding fertiliser (5, 7.5, 5) may be added to the growing material at the mixing stage or sprayed or sprinkled onto the surface of the layer of growing material in situ. The fertiliser should be chosen to provide a balanced supply of the main nutrients required for healthy turf growth.

The ratio of the components of the growing material will depend to some extent on the nature of the components chosen. Where silica sand is used, this preferably comprises from 50 to 95% by volume most preferably from 60 to 85% by volume of the total composition. Where sand bonded with water activated clay is used, this preferably comprises from 50 to 95 percent by volume of the total composition.

For the organic growth supporting medium, where top soil or compost is used, this preferably comprises from 5 to 50% by volume most preferably from 10 to 30% by volume of the total growing material composition, and where peat is used this preferably comprises from 5 to 25% by volume most preferably from 5 to 15% by volume of the composition.

Where a seaweed based soil conditioner is used this is preferably applied in an amount of from 50 to 100g/m², preferably about 75g/m².

The fertiliser is preferably added in an amount of from 10 to 50kg/20 tonnes of total composition by weight, for example about 25kg/20 tonnes of total composition by weight, or applied to the layer in situ at a rate of from 50 to 100g/m², preferably about 75g/m².

The percentage of polypropylene fibres in the total composition is preferably in the range of 0.1 to 0.9% by weight, most preferably from 0.25 to 0.5% by weight, for example about 0.4% by weight. In general the percentage of polypropylene fibres is at the higher end of the range when silica sand is used, and the lower end of the range when sand bonded with water activated clay is used. The fibres may be coloured to conform to the colour of the growing material and thereby be substantially invisible in use.

The components of the growing material may be mixed in any order, or simultaneously, to give a substantially homogeneous mixture. It is important to distribute the fibres evenly and randomly throughout the mixture, and it has been found in practice that it is preferable to pre-mix the sand and the fibres together to obtain an even, random dispersion.

In the preparation of an all-weather grass surface according to the invention, turf and top soil are removed to the required depth and replaced with a layer of the growing material. A greater depth of turf and top soil may be removed particularly if the drainage characteristics are poor and the lower layer may be replaced with a drainage base comprising clean crushed rock or gravel of appropriate size laid to an appropriate thickness in accordance with normal drainage engineering design rules.

The growing material is prepared by taking a quantity (usually several tonnes) of blended sand and organic material which is in a fairly moist condition and mixing into the blend a quantity of the two types of fibres (polyurethane and polypropylene fibres) of the desired length. The sand is preferably selected to have an average particle size of from 100 to 1000 microns with particles of rounded to sub-angular shape and is mixed with the two types of fibres for example in a high intensity mixer of the contra-rotating type which mixes the fibres homogeneously in a randomly orientated distribution throughout the sand.

The random distribution of polypropylene fibres stabilises the sand-dominant rootzone imparting resistance to particle movement particularly under shear stress from players studded footwear thus minimising spreading and divoting of the surface such that a sure footing is obtained. The polypropylene fibre length is required to be long enough such that a "crosslinking" effect is produced thereby preventing the sand from moving under the pressure of the players feet, or other users such as wheeled vehicles or implements.

The presence of the polyurethane fibres provides a substantial change in the performance of the resultant surface resulting in significant reduction in surface hardness and significant reduction in ball rebound, with substantial improvement in traction.

Thus the particle size of the sand and the diameter and length of the polypropylene fibres require to be carefully selected within the preferred ranges to suit the intended use.

The shape of individual polyurethane fibres used is not particularly important, and individual ones in an unstressed state can for example be straight, curved, helical, spiral, or with one or more randomly spaced and randomly directed bends, the various types or shaped fibres being mixed in any suitable combination.

Relatively straight polypropylene fibres need to be used since crimped fibres are not readily mixed to produce a substantially "homogeneous" mixture. The length of the polypropylene fibres is of particular importance since this provides, in the homogenous mixture, the crosslinking which is necessary to prevent the mixture from spreading under the shock loading produced by horses hooves, players feet, or other users as aforesaid.

Mixing of the sand and the organic growth supporting medium together is followed by the addition of the two types of fibres, and thereafter any soil conditioner and/or fertiliser. The resulting mix of growth material is delivered to the prepared site and laid out to the required depth to give the desired surface characteristic which can be altered by the choice of said particle size and the percentage of the individual components mixed therewith.

Grass seed is then applied to the layer of growing material at a rate depending on local conditions, but usually within the range of 25 to 35 g/m². In the alternative, the layer of growing material may be turfed using turf which has been grown on the same type of rootzone as used for the growing material.

It is found that, using the method of the invention, an all-weather resilient grass surface of player-friendly characteristics can be prepared which is free-draining such that, even after prolonged periods of heavy rain, water will not stand on the surface. The surface remains relatively dry and mud-free, to provide a firm footing for sporting activities. In addition, it is found that the surface resists compaction, and the root zone retains a good structure even when subjected to heavy wear under wet conditions. This improves aeration giving the grass ideal growing conditions, and allows healthy and vigorous root development. The result is a thicker, more dense cover of grass.

It is found that the preferred grass surfaces of the invention have greatly improved traction, sheer resistance and stability. The synthetic fibres act like a mass of relatively indestructible roots, and provide a rot-proof structure to the root zone. It is believed that the distributed fibres, rather than the grass roots, take the strain from shocks and pressure to the system, and prevent the surface from breaking up. Grass regeneration after winter conditions is very quick because the roots have remained intact. For the same reason, recovery from any shallow divotting is very speedy.

The new all-weather grass surface of the present invention is particularly suitable for sporting areas having high usage, for example football and rugby pitches.

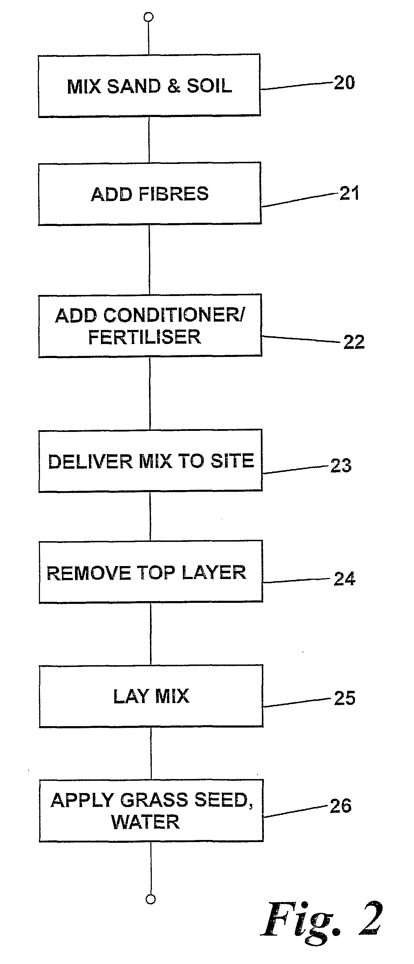

Figure 2 is a flow diagram of the method of forming the grass surface of the present invention as shown in Figure 1.

Separate delivery slots deposit a quantity of moist silica sand and soil (20% by volume) onto a moving conveyor belt (step 20) to which is then added firstly 3% by final weight of polyurethane fibres and thereafter 0.3% by final weight of polypropylene fibres, and then fed into a high intensity contra-rotating mixer (step 21).

In a variant, the two forms of fibre (polyurethane and polypropylene) are first combined together, before being added to the sand / soil combination.

Then 75 g/m² of a seaweed-based soil conditioner and 75 g/m² of growing fertiliser is added (step 22), and this mix is delivered to site (step 23).

Turf and top soil to a depth of 100mm is removed from the pitch in the area for treatment (step 24), and the mix is laid over the area for treatment (step 25).

Once this area has been covered by the mix, grass seed is applied at a rate of 30 g/m² (step 26) and then regularly watered.

### Experimental Details

### First Trial

A confidential field trial was conducted. The trial area was constructed on an existing sand carpet construction over slit drains, the trial area comprising four separate adjacent sections, each with the uppermost layer of depth 10⁻¹ metres, modified as follows:
1. Conventional rootzone.
2. Standard pitch surface product.
3. Pitch surface product of the present invention with 2.0% polyurethane fibres (weight basis).
4. Pitch surface product of the present invention with 4.0% polyurethane fibres (weight basis).

The experimental treatments were laid out in a randomised block design with five replications. The individual plot size was 2.0 m x 2.0 m.

The trial was sown with perennial ryegrass (*Lolium perenne*) seed at a rate of 45 g/m⁻² and established for that year's playing season and the next year's season.

Artificial wear was applied during the course of the football season, except during frosty conditions and during the Christmas and New Year period, using a differential slip wear machine at a maximum rate of four passes per week. This correlates to approximately an area of a football pitch which is receiving a moderate-to-high rate of wear, for example at the centre of the pitch.

### Management

Table 1 gives a summary of management procedures during the course of the trial.

**TABLE 1**

| Summary of management procedures | | | | |
|---|---|---|---|---|
| Mowing | Twice weekly at 50mm | 31 May - 02 June 05, clippings removed | | |
| | Twice weekly at 40mm | 06 June - 15 June 05, clippings removed | | |
| | Twice weekly at 30mm | 17 June - 04 July 05, clippings removed | | |
| | Twice weekly at 25mm | 07 Jul - 30 Sept 05, clippings removed | | |
| | Once weekly at 25mm | 03 Oct - 24 Apr 06, clippings removed | | |
| | Twice weekly at 25mm | 02 May - 22 May 06, clippings removed | | |
| Aeration | Eleven occasions with 100mm solid tines | 14 Sept 05 -11 May 06 | | |
| Fertiliser | 26 Apr 05 - seedbed fertiliser | 8:12:8 @ 35g m⁻² | | |
| | 26 May 05 | 12:6:6 @ 35g m⁻² | | |
| | 24 June 05 | 12:6:6 @ 35g m⁻² | | |
| | 19 July 05 | 12:3:9 @ 35g m⁻² | | |
| | 31 Aug 05 | 12:3:9 @ 35g m⁻² | | |
| | 06 Oct 05 | 12:3:9 @ 35g m⁻² | | |
| | 11 Nov 05 | 12:3:9 @ 35g m⁻² | | |
| | 05 Jan 05 | 12:6:6 @ 20g m⁻² | | |
| | Total fertiliser applied (kg ha⁻¹) | Nitrogen | Phosphorus | Potassium |
| | | 304 | 138 | 208 |
| Irrigation | Water was applied using a pop-up irrigation system during grass establishment and when necessary to replace evapotranspiration. Application rates were determined using a Toro Trident irrigation controller. | | | |
| Wear applied | 2 passes per week from 31 Aug 05 to 06 Dec 05 | | | |
| | 4 passes per week from 08 Dec 05 to 12 Jan 06 | | | |
| | 2 passes per week from 12 Jan 06 to 24 Jan 06 | | | |
| | 1 pass per week from 26 Jan 06 to 04 Apr 06 | | | |
| | 2 passes per week from 07 Apr to 11 May 06 | | | |
| | Total number passes = 109 | | | |

### Measurements

- Assessment of ground cover by reflectance ratio. Four readings per plot.
- Ball rebound resilience: Measured using a 3 m drop height with a Nike Total 90 Aerow ball inflated to a pressure of 0.7 bar. Four reading per plot.
- Traction: Torque required to initiate movement of a studded sole, using the standard arrangement of six 15 mm studs. Four readings per plot.
- Hardness: Measured as the deceleration of a 0.5 kg test mass released from a height of 0.55 m using a Clegg Impact Soil Tester. Six readings per plot.
- Infiltration: Rate of water infiltration into surface measured using a double ring infiltrometer. Three readings per plot.
- Moisture content: Soil moisture content was measured, using a Theta probe HH2 soil moisture sensor, at the same time as field assessments to give an indication of changes in moisture content during the monitoring period.

Measurement of ground cover, ball rebound resilience, traction and hardness were carried out six times during 2005-2006 playing season. Water infiltration rates were assessed in April 2006.

### Statistical Analysis

The data were analysed using "analysis of variance". A significance level of P<0.05 was used. Where appropriate, the least significant difference (LSD 5%) was calculated to indicate differences between treatment means.

The results were also compared with preferred and acceptable limits for playing quality measurements on natural surface football pitches (Table 2).

**TABLE 2**

| Preferred and acceptable limits of playing quality procedures for football (Baker 1999) | | |
|---|---|---|
| Parameter | Preferred range | Acceptable range |
| Ball bound resilience (%) | 20-50 | 15-55 |
| Traction (N m) | ≥25 | ≥20 |
| Hardness (Gravities) | 55-140 | 35-200 |

### Results

The testing programme was carried out under a wide range of conditions. Table 3 shows the mean volumetric moisture content (VMC) at the time of testing and the mean values for playing quality measurements for all treatments.

**TABLE 3**

| Mean values of moisture content, ground cover and playing quality assessments for dates of testing | | | | | |
|---|---|---|---|---|---|
| Date | VMC (%) | Ground Cover (%) | Hardness (Gravities) | Ball Rebound (%) | Traction (N m) |
| Aug 05 | 20.8 | 83 | 127 | 41.6 | 64.7 |
| Oct 05 | 23.4 | 81 | 124 | 39.5 | 61.1 |
| Dec 05 | 29.8 | 80 | 115 | 44.2 | 54.3 |
| Jan 06 | 29.5 | 55 | 130 | 42.5 | 47.2 |
| Mar 06 | 31.1 | 65 | 102 | 43.4 | 44.3 |
| May 06 | 23.6 | 63 | 124 | 46.8 | 41.4 |

### Ground cover

Ground cover for the first three assessment dates (August, October and December 2005) remained above 75% for all treatments. The only statistically significant effect was during October, when the surface product of the present invention at the 4.0% rate had significantly greater grass cover than the standard surface product (Table 4). Between 8 December and 12 January, artificial wear was doubled from two passes per week to four passes per week which significantly reduced ground cover from an average of 80% over the whole trial to just 55%.

With the higher application of wear, reflectance ratio results during January and March 2006 showed significantly greater values of ground cover on the plots incorporating the surface product of the present invention than the conventional rootzone and the standard surface product. There were no significant differences between the two rates of fibre amendment. During May the standard surface product treatment showed significantly lower ground cover results than all other treatments.

**TABLE 4**

| Ground cover results for each testing date using the Reflectance Ratio | | | | | |
|---|---|---|---|---|---|
| Date | Conventional rootzone | Standard surface product | Present invention (2.0%) | Present invention (0.4%) | LSD (P<5%) |
| Aug 05 | 83 | 83 | 83 | 83 | NS |
| Oct 05 | 81 | 81 | 81 | 82 | 0.8 |
| Dec 05 | 80 | 80 | 81 | 81 | NS |
| Jan 06 | 54 | 54 | 56 | 57 | 1.1 |
| Mar 06 | 64 | 63 | 65 | 67 | 1.1 |
| May 06 | 64 | 62 | 63 | 64 | 1.4 |

| | | | | | |
|---|---|---|---|---|---|
| NS= Not significant | | | | | |

### Hardness

All hardness values fall within the preferred range for natural turf football pitches (55-140 gravities), with the exception of the standard surface product during August, October and January when values are slightly higher, but well within the acceptable range for natural turf pitches (35-200 gravities)

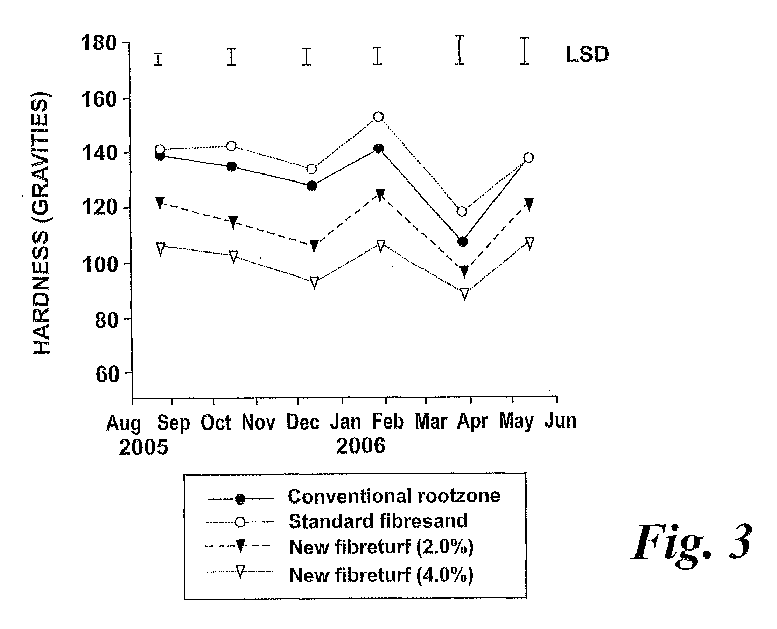

The surface product of the present invention at both fibre rates had significantly lower hardness values than the conventional rootzone and the original standard surface product over the whole testing period (Figure **3**). Hardness values on the surface product of the present invention at the rate of 2.0% and 4.0% fibre amendment were up to 20% and 30% lower than the standard surface product, respectively. The standard surface product was consistently harder than all other treatments over the whole testing period.

### Ball Rebound Resilience

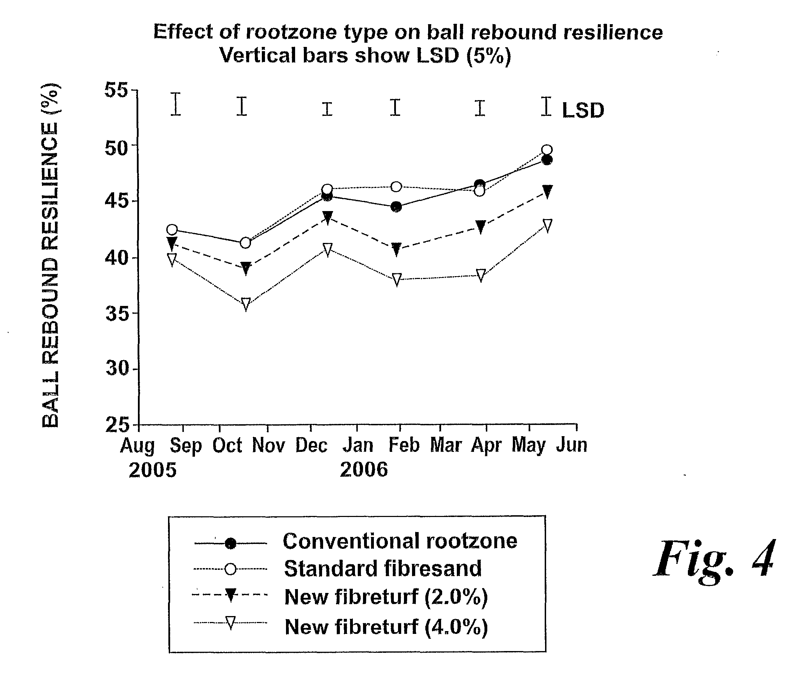

All ball rebound values fell within preferred range for natural turf football pitches (20-50%). Generally the standard surface product ("standard fibresand") had the highest ball rebound values (Figure 4). The surface product of the present invention ("new fibreturf") treatments gave significantly lower ball rebound than both the conventional rootzone and the standard surface products for all dates. The one exception was in August, when only the 4.0% rate was significantly lower. There was a significant difference between the two surface products of the present invention treatments on five out of the six assessments dates, with plot incorporating the higher rate of fibres having significantly lower ball rebound resilience. Over the course of the trial, the conventional rootzone had very similar ball rebound properties to the standard surface product, the exception being during January when the standard surface product, was significantly greater.

### Traction

Traction values declined steadily as wear was applied. However, traction results remained within the preferred range for natural turf footballs pitches (≥25 N m) even at the end of the trial. Significant treatment effects were recorded on all but the initial assessment dates. While grass cover remained high, there was no consistent effects of any of the treatments.

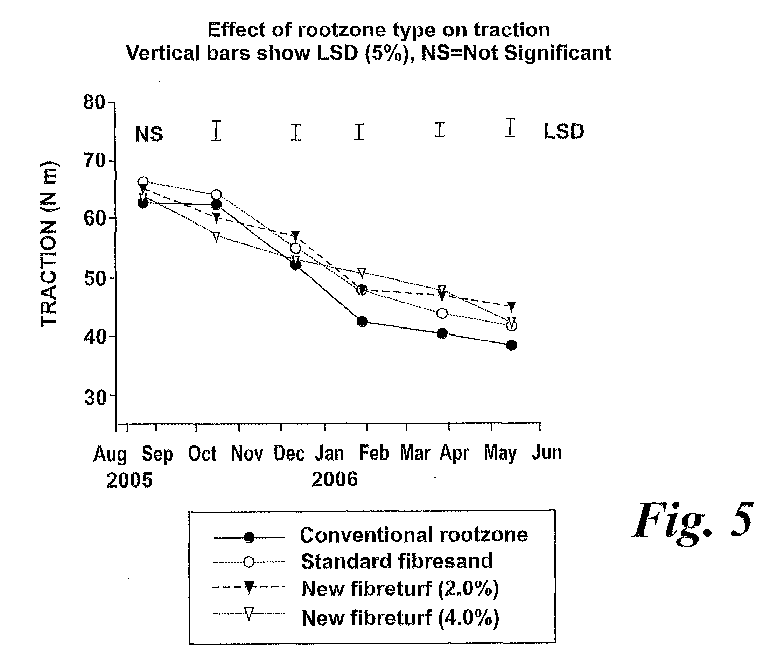

In October, grass cover was still high, though there was a significant effect between treatment with the new surface product at 4.0% having significantly lower traction than all other treatments (Figure 5). The total live grass cover in December was still very good, averaging 80% cover over the whole trial area, though traction for the conventional rootzone dropped considerably in proportion to all other treatments, resulting in significantly lower traction for the conventional rootzone and 4.0% new surface product than the other treatments.

However, once grass cover decreased substantially from January 2006 onwards, the conventional rootzone had significantly lower traction than the surface product treatments for the remainder of the trial. During March and April, traction was significantly greater on the new surface product treatments than the standard surface product (2.0% rate was significant on both dates, 4% rate in March only).

### Water infiltration rate

Water infiltration was assessed in April, towards the end of the trial. Values were relatively low across all treatments because of the presence of the underlying sand. However, there were no significant differences observed (Table 5).

**TABLE 5**

| Water infiltration rates (mm.hr⁻¹) measured in April 2006 | | | | |
|---|---|---|---|---|
| Conventional Rootzone | Standard Fibresand | New Fibresand (2.0%) | New Fibresand (4.0%) | LSD (P<5%) |
| 5 | 9 | 4 | 7 | NS |

| | | | | |
|---|---|---|---|---|
| NS=Not significant | | | | |

All the features disclosed in this specification (including any accompanying claims, abstract and drawings), and/or all of the steps or any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

### Second Trial

Two pitches were reconstructed during the summer of 2007 with the upper 100 mm of the rootzone layer being removed and replaced with a layer of turf of the present invention, containing both polyurethane and polypropylene fibres at a rate of 3.2% by dry weight.

Previous experimental work on trial plots at the STRI (Spring & Baker 2006) had shown significant advantages in terms of hardness and traction from the inclusion of polyurethane as well as polypropylene fibres. There were also some smaller positive effects on grass cover during wear.

The objective of the current work was to monitor the quality of the surface on two football pitches during the course of a season, whilst at the same time reviewing pitch management in the light of the results obtained.

### BACKGROUND

Usage levels at Bristol City amounted to 36 games and ten training sessions up to 10 April. There had also been a pop concert during the summer of 2007.

At Newcastle there had been 33 games up to 11 April, including a number of reserve fixtures from February onwards, and there had also been a pop concert on 25 June 2007.

The main difference in the management at the two grounds was that, at Newcastle, SGL lighting units were used to support grass growth through supplementary lighting.

### MEASUREMENTS

Measurements of grass cover and playing quality were made on four dates at each ground as follows:
Bristol City: 15 August & 25 October 2007. 14 February & 10 April 2008
Newcastle United: 7 September & 13 November 2007. 21 February & 11 April 2008

The following measurements were made:
a) Grass cover - by visual estimate (BS EN 12231: 2003). Four quadrat positions per test area.
b) Hardness using a 0.5 kg Clegg hammer dropped from 0.55 m (STRI SOP. No. 200698). Additional measurements were taken using a 2.25 kg Clegg hammer dropped from 0.45 m, as new standards for turf hardness have also been developed using this test procedure. Eight readings for each hammer weight per test area.
c) Traction using a studded disc (STRI SOP No. 200798). Four readings per test area.
d) Volumetric water content of the upper 60 mm using a Theta probe. Four readings per test area.

Measurements were made in five positions on the pitch: each goalmouth (adjacent to the 6 yard line), on the wing at each end (as an extension to the 18 yard line, 5 m from the edge of the pitch), and in the centre circle.

### RESULTS

### Grass cover

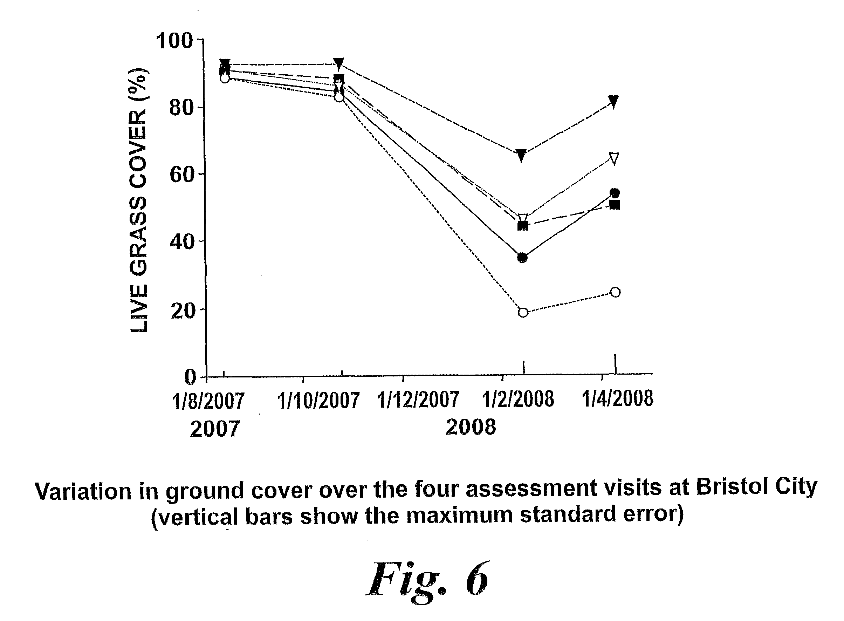

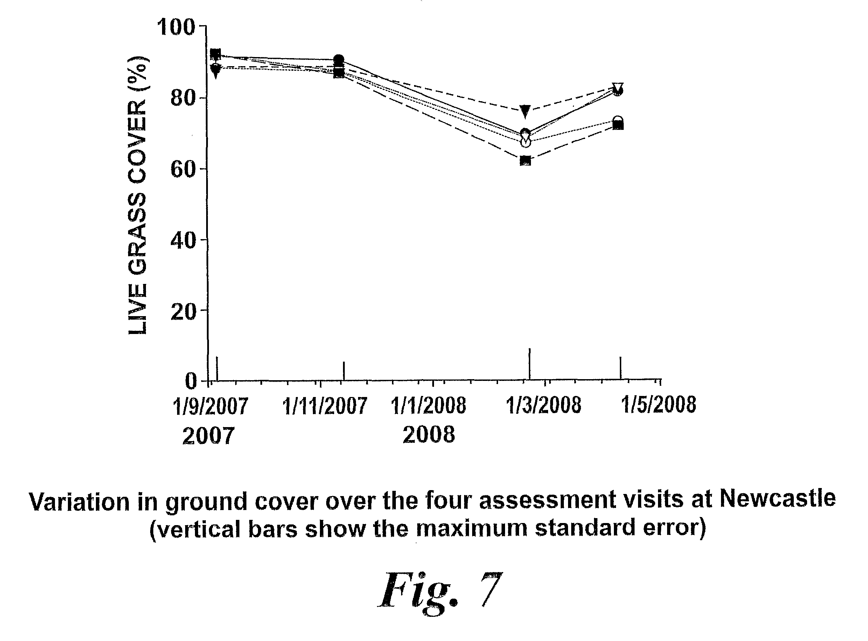

The fact that concerts took place almost certainly had some localised effects on grass cover, but by the first assessment date grass cover on both grounds exceeded 90% (see Figures 6 and 7, in which a close-up photograph of grass cover in the centre circle is shown for each date). Grass cover was predominantly perennial ryegrass but with occasional plants of annual meadow-grass.

At Bristol City, there was a notably high weed content and, within the 20 frame quadrat positions across the pitch, 60% contained clover and 30% contained other broad-leaved weeds. This was addressed by spraying with a selective weedkiller.

Grass cover remained high during the second assessment date, averaging 87% at Bristol City and 91% at Newcastle. However, there was the inevitable thinning by February with average grass cover at Bristol City falling to 41% whilst at Newcastle use of the light system kept the corresponding figure to 70%. There was recovery at both grounds by mid April to an average of 54% live cover at Bristol City and 81% at Newcastle.

There was significant spatial variation in the grass cover results at Bristol City, with values being lowest in the goalmouths, especially for the more shaded south end of the ground (Table **6**). The lowest recorded value for any specific position was 18% grass cover in the south goal in February.

**TABLE 6. Spatial variation of grass cover and playing quality measurements on each pitch.**

| Values shown are the overall mean and the lowest or highest mean values on each measurement date (in brackets) | | | | | | |
|---|---|---|---|---|---|---|
| | | N goal | S goal | NE wing | SW wing | Centre circle |
| Total grass cover (%) | Bristol City | 65 | 53 | 83 | 72 | 68 |
| | Range | (34-89) | (18-89) | (65-93) | (46-91) | (44-91) |
| | | | | | | |
| | Newcastle | 86 | 81 | 86 | 85 | 81 |
| | Range | (71-94) | (69-91) | (78-91) | (70-95) | (64-95) |
| | | | | | | |
| Volumetric water content (%) | Bristol City | 23.7 | 24.7 | 22.9 | 24.0 | 21.6 |
| | Range | (20-27.7) | (21.5-30.5) | (19-27.9) | (21.0-27.5) | (19.0-25.8) |
| | | | | | | |
| | Newcastle | 26.9 | 26.6 | 24.2 | 25.8 | 25.0 |
| | Range | (24.7-30.5) | (24.4-31.1) | (23.0-26) | (24.8-27.3) | (22.6-27.1) |
| | | | | | | |
| Hardness 0.5 kg Clegg hammer (gravities) | | | | | | |
| | Bristol City | 108 | 109 | 107 | 104 | 111 |
| | Range | (98-116) | (100-125) | (94-118) | (98-121) | 95-125) |
| | | | | | | |
| | Newcastle | 102 | 102 | 108 | 107 | 103 |
| | | (90-111) | (88-115) | (93-130) | (89-124) | (90-114) |
| | | | | | | |
| Hardness 2.25 kg Clegg hammer (gravities) | | | | | | |
| | Bristol City | 81 | 80 | 79 | 78 | 81 |
| | Range | (68-91) | (71-92) | (69-85) | (70-82) | (70-92) |
| | | | | | | |
| | Newcastle | 84 | 82 | 83 | 83 | 81 |
| | Range | (68-100) | (58-100) | (63-101) | (56-103) | (56-93) |
| | | | | | | |
| Traction (N m) | Bristol City | 40.7 | 43.4 | 43.8 | 45.1 | 48.0 |
| | Range | (34-45.3) | (33.3-58.8) | (37.5-52.8) | (36.0-49.3) | (41.0-55.8) |
| | | | | | | |
| | Newcastle | 42.7 | 42.1 | 40.6 | 43.2 | 41.6 |
| | Range | (40.0-45.6) | (39.5-46.0) | (39.8-42.3) | (39.0-50.8) | (38.0-47.3) |

At Newcastle, use of the light rigs reduced grass cover loss in the high wear areas and the lowest recorded value for any particular pitch position was 54% for the centre circle in February 2008.

The content of annual meadow-grass increased slightly at both grounds during the course of the season to mainly 1-5% at Bristol City (although around 10% in the south-west corner) and 1-2% at Newcastle.

### Volumetric water content

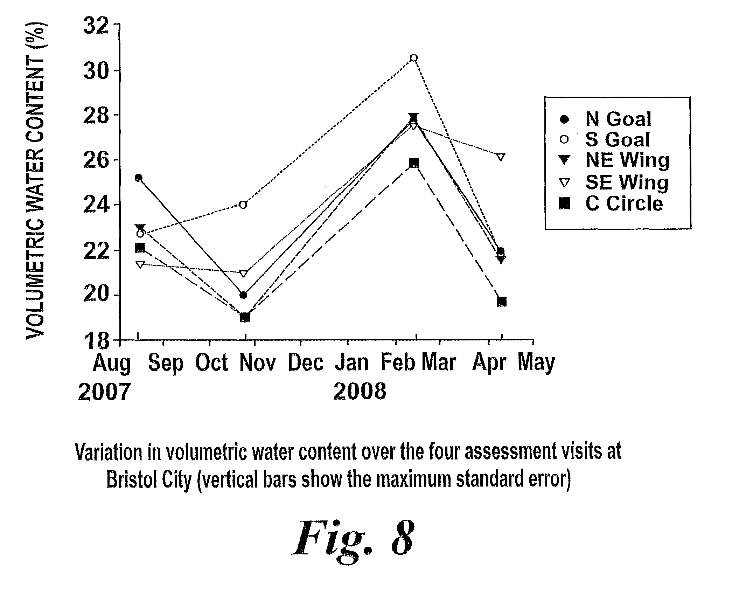

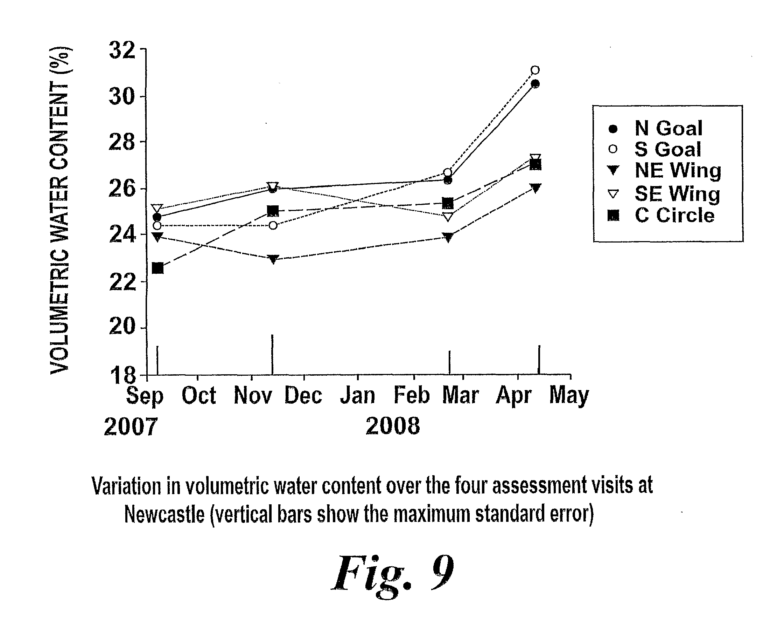

Mean values for each sampling date are given in Figures 8 and 9 and spatial variation between the different pitch positions is shown in Table **6**.

At Bristol City, overall mean values were in the range 20.0% to 27.9%, with the lowest figures in October 2007 and the highest values in February 2008 (Fig. 2a). When all sampling positions were considered individually, the range was 19.0% to 30.5%.

At Newcastle, all overall mean values were in the range 24.2% to 28.4%, with the lowest values in September 2007 and the highest in April 2008. When all sampling positions were considered, the range was 22.6% to 31.1 %

If total porosity is assumed to be about 45%, the air-filled porosity over all dates and test positions would have ranged from approximately 14% to 28%, with an average value of approximately 20.5%. All values are sufficient to ensure healthy grass growth and significant problems only occur if values are below 10% for prolonged periods (Gibbs & Baker 1989).

There was some spatial variation in soil water content. At Bristol City, moisture content tended to be greatest at the more shaded south end of the ground, while at Newcastle the highest average values were for the two goalmouths (Table **6**).

### Hardness

Hardness was measured as peak deceleration using two different Clegg hammers. The 0.5 kg hammer has been used for many years in the United Kingdom but revised standards were produced using the 2.25 kg hammer during the course of this study (Baker *et al*. 2007).

### i) 0.5 kg hammer

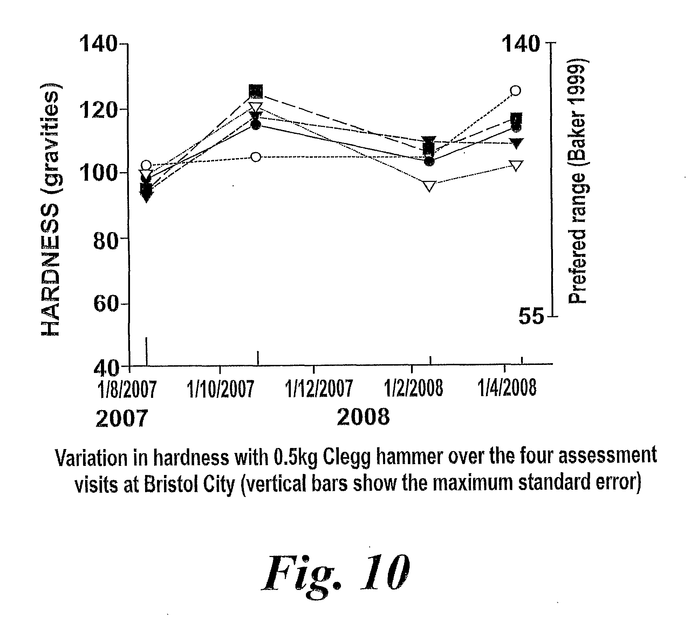

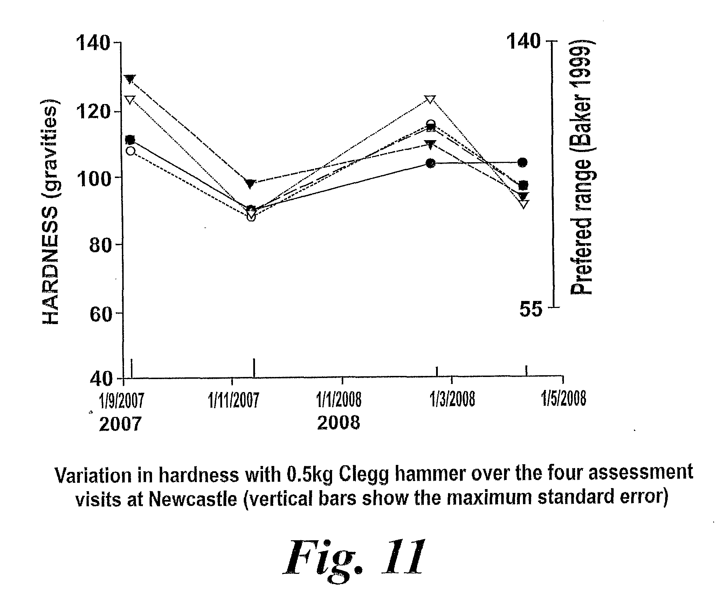

Overall mean values incorporating all pitch positions ranged from 97 gravities to 117 gravities at Bristol City (Figure 10). The lowest values were recorded in August 2007 when there was a full grass cover and the highest were in October 2007 after a slight thinning of cover but a notable reduction in water content. At Newcastle, the lowest overall mean was 91 gravities in October 2007 and the highest value was 116 gravities in September 2007, which coincided with a relatively long spell with no aeration work (Figure 11).

Spatial variation between the different test positions was relatively small (Table **6**) in relation to the temporal variation that was recorded.

Taking all mean values from each test position and each sampling date, the range of values was from 94 gravities to 125 gravities at Bristol City. The corresponding figures for Newcastle were 88 gravities and 130 gravities. All these values were within the preferred range of 55-140 gravities given by Baker (1999).

### ii) 2.25 kg Clegg hammer

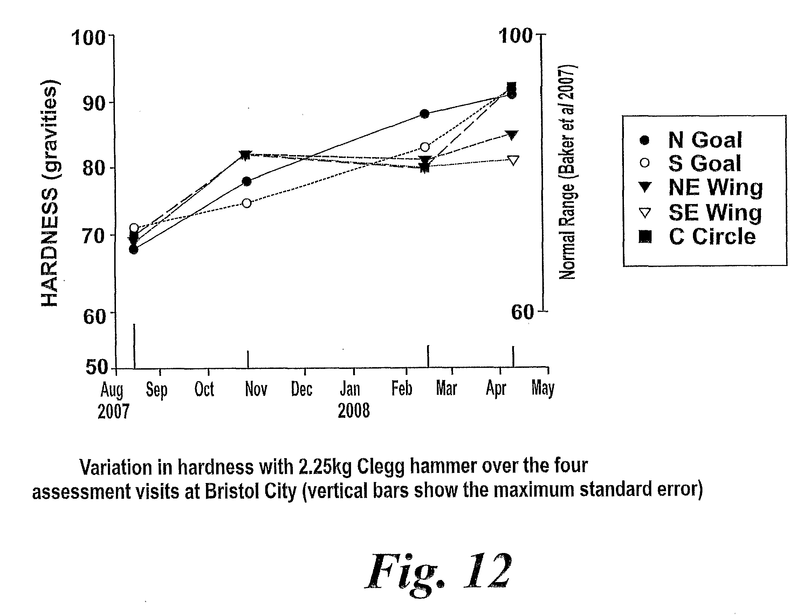

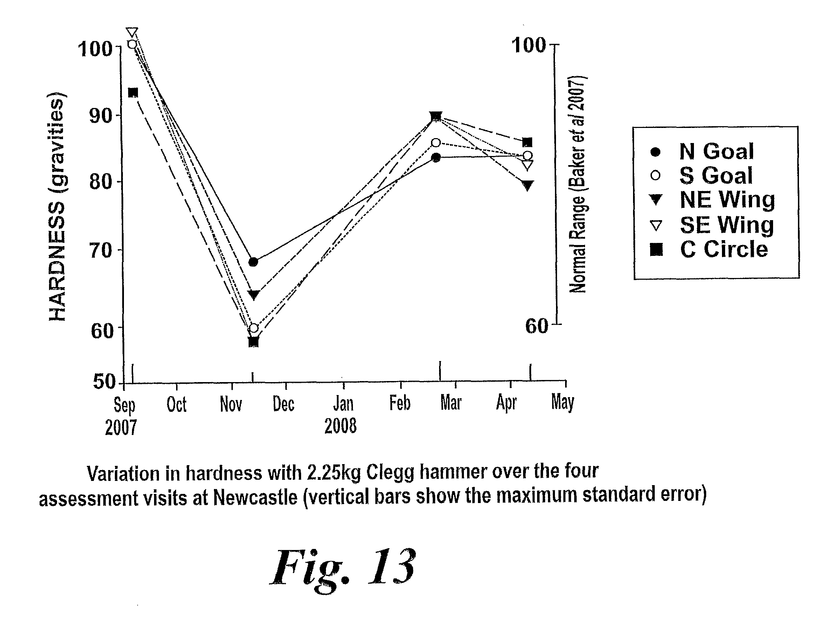

Mean values including all pitch positions ranged from 70 gravities to 88 gravities at Bristol City (Figure 12) and 60 gravities to 99 gravities at Newcastle (Figure 13). The lowest values at Bristol City were in September 2007, when there was a full grass cover and the highest values were in April 2008, coinciding with a period with no recent aeration work. At Newcastle, the lowest values were in November 2007 (eight days after use of the Toro ProCore with no games in between) and the highest values were in September 2007 when no aeration had taken place for 32 days.

Spatial variation in hardness measured using the 2.25 kg Clegg hammer is shown in Table 6. Again, there were no consistent patterns in hardness values for the different pitch areas and the level of spatial variation was less than the level of temporal variation.

When all pitch positions were considered and for all sampling dates, the range of values was 68 gravities to 92 gravities at Bristol City and 56 gravities to 103 gravities at Newcastle. All values at Bristol City were within the normal range for professional clubs of 65-100 gravities (Baker *et al* 2007).

All values from the February and April visits at Newcastle were within this range. Values in November were slightly below 65 gravities because of recent aeration work but would almost certainly have increased following the use of the cylinder mowers in preparation for the next game. Values in September were slightly high because of the lack of recent aeration but the highest value of 103 gravities needs to be considered in relation to the full range of values recorded at professional football clubs of approximately 35 gravities to 125 gravities (Baker *et al*. 2007).

### Traction

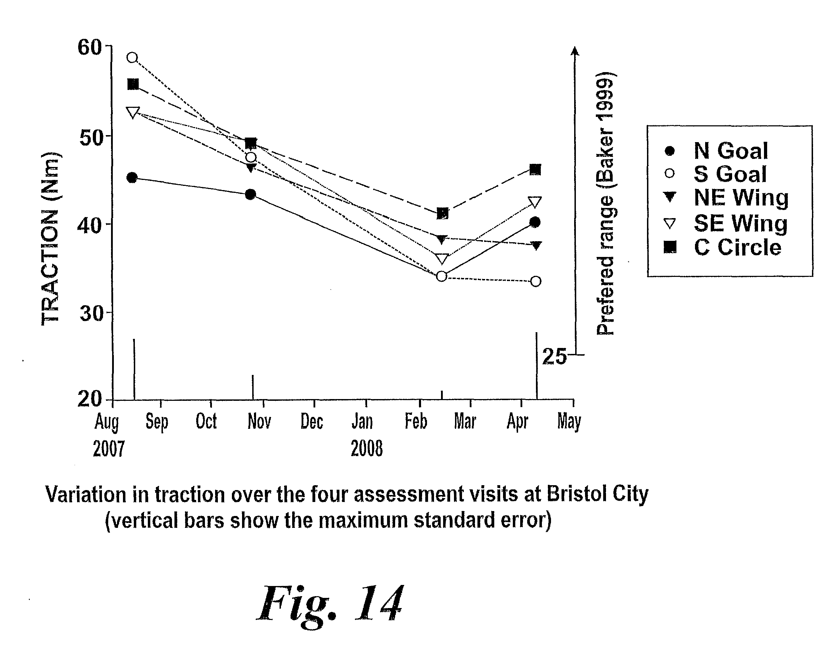

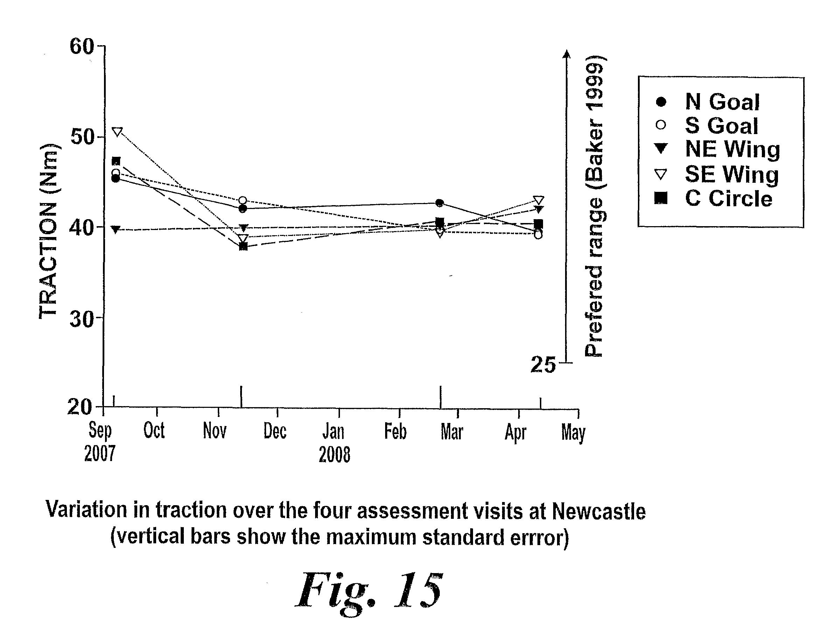

Traction values tend to be related to grass cover figures with the highest values at the start of the season and the lowest values during the period of maximum wear before some recovery in spring. This general pattern was evident at Bristol City (Figure 14) but less strongly at Newcastle (Figure 15).

There was some spatial variation in traction values at Bristol City, with the goalmouths generally having the lowest values, especially at the time of maximum wear (Table 1). However, at Newcastle use of the lights to sustain growth has largely removed any consistent spatial effects within the data.

When all pitch positions were considered for all sampling dates, the range of values was 33.3 N m to 58.8 N m at Bristol City and 38.0 N m to 50.8 N m at Newcastle. Baker (1999) indicates a preferred range of values greater than 25 N m, and this was achieved by all measurements. This preferred range was, however, applicable to a good standard of amateur play. Values instead could be compared to an overall range of 28 N m to 72 N m and a central range (excluding the lowest 10% and highest 10% of values of 37 N m to 60 N m for pitches used for professional football (Baker and Woollacott 2005).

### DISCUSSION

Both pitches performed well during the course of the playing season and based on marks from referees, match delegates and the away manager, the pitch at Newcastle was rated in the top three in the Premier League and the pitch at Bristol City was in the top five in the Football League Championship.

Hardness values were in the preferred/normal ranges at Bristol City at all times and on most occasions at Newcastle. The results indicate that hardness values are strongly influenced by aeration work that is carried out, even where some elasticity is introduced into the rootzone by the incorporation of the polyurethane fibres.

Traction values remained in the preferred range on all occasions and the presence of the fibres appears to confer stability and reduce the risk of divots being removed.

## Claims

1. A growing material for a grass surface (1), which material comprises sand, an organic growth-supporting medium, and elongate elastomeric polymer fibres, the growing material being **characterised in that** it further includes elongate synthetic polymeric substantially rigid fibres, and **in that** each of the rigid fibres and the elastomeric fibres are randomly dispersed as separate individual fibres in the growing material, the growing material being **characterised in that** the ratio of elastomeric fibres to rigid polymeric fibres in the growing material is between 12:1 and 8:1.

2. A growing material according to Claim 1 wherein the elastomeric fibres comprise one or more of:
(a) polyurethane fibres;
(b) polyurethane fibres of a length in the range of 1 to 200mm;
(c) polyurethane fibres of a length in the range of 5 to 100mm;
(d) modified polyurethane fibres e.g. polyurethane/polyethylene glycol; and
(e) elastane fibres.

3. A growing material according to Claim 1 or Claim 2 comprising elastomeric fibres which are one or more of the following: substantially straight, substantially curved, substantially helical or spiral.

4. A growing material according to Claim 1 or Claim 2 comprising elastomeric fibres which have one or more bends.

5. A growing material according to Claim 4 having a plurality of randomly-spaced bends.

6. A growing material according to Claims 4 or 5 wherein the direction of adjacent bends are randomly arranged.

7. A growing material according to Claim 1 or Claim 2 comprises elastomeric fibres which are crimped.

8. A growing material according to any of the preceding claims, in which the percentage of elastomeric fibres in the growing material is in the range of 0.5 to 6% by weight based on the total weight of the growing material.

9. A growing material according to any of the preceding claims, in which the percentage of elastomeric fibres in the growing material is in the range of 2 to 4% by weight, based upon the total weight of the composition.

10. A grass surface (1) **characterised in that** the grass is grown in a layer of growing material according to any preceding claim.

11. A grass surface (1) according to Claim 10 comprising grass turf (2) combined with the growing material.

12. A grass surface (1) according to Claim 11 comprising a combination of the growing medium and grass seeds for germination growth and/or germinated/grown.

13. A method of forming a grass surface (1), **characterised by** sowing grass seed in, or applying turf to, a layer of growing material according to any of Claims 1 to 9.

## Patentansprüche

1. Wachstumsmaterial für eine Grasfläche (1), wobei das Material Sand, ein organisches wachstumsförderndes Medium und längliche elastomere Polymerfasern umfasst, wobei das Wachstumsmaterial **dadurch gekennzeichnet ist, dass** es ferner längliche, im Wesentlichen starre synthetische Polymerfasern umfasst, und dadurch, dass jede der starren Fasern und der elastomeren Fasern als separate einzelne Fasern willkürlich im Wachstumsmaterial verteilt sind, wobei das Wachstumsmaterial **dadurch gekennzeichnet ist, dass** das Verhältnis elastomerer Fasern zu starren Polymerfasern im Wachstumsmaterial zwischen 12:1 und 8:1 beträgt.

2. Wachstumsmaterial nach Anspruch 1, wobei die elastomeren Fasern eines oder mehreres des Folgenden umfassen:
(a) Polyurethanfasern,
(b) Polyurethanfasern mit einer Länge im Bereich von 1 bis 200 mm,
(c) Polyurethanfasern mit einer Länge im Bereich von 5 bis 100 mm,
(d) modifizierte Polyurethanfasern, z. B. Polyurethan-/Polyethylenglycol und
(e) Elasthanfasern.

3. Wachstumsmaterial nach Anspruch 1 oder 2, elastomere Fasern umfassend, die eines oder mehreres des Folgenden sind: im Wesentlichen gerade, im Wesentlichen gebogen, im Wesentlichen schrauben- oder spiralförmig.

4. Wachstumsmaterial nach Anspruch 1 oder 2, elastomere Fasern umfassend, die eine oder mehrere Krümmungen aufweisen.

5. Wachstumsmaterial nach Anspruch 4, mehrere willkürlich beabstandete Krümmungen aufweisend.

6. Wachstumsmaterial nach Anspruch 4 oder 5, wobei die Richtung benachbarter Krümmungen willkürlich angeordnet ist.

7. Wachstumsmaterial nach Anspruch 1 oder 2, elastomere Fasern umfassend, die gekräuselt sind.

8. Wachstumsmaterial nach einem der vorhergehenden Ansprüche, wobei der Prozentsatz elastomerer Fasern im Wachstumsmaterial bezogen auf das Gesamtgewicht des Wachstumsmaterials im Bereich von 0,5 bis 6 Gew.-% liegt.

9. Wachstumsmaterial nach einem der vorhergehenden Ansprüche, wobei der Prozentsatz elastomerer Fasern im Wachstumsmaterial bezogen auf das Gesamtgewicht der Zusammensetzung im Bereich von 2 bis 4 Gew.-% liegt.

10. Grasfläche (1), **dadurch gekennzeichnet, dass** das Gras in einer Schicht des Wachstumsmaterials nach einem der vorhergehenden Ansprüche gewachsen ist.

11. Grasfläche (1) nach Anspruch 10, Grasnarbe (2) umfassend, die mit dem Wachstumsmaterial kombiniert ist.

12. Grasfläche (1) nach Anspruch 11, eine Kombination des Wachstumsmediums und Grassamen für Keimungswachstum und/oder gekeimt/gewachsen umfassend.

13. Verfahren zum Bilden einer Grasfläche (1), **gekennzeichnet durch** Aussäen von Grassamen in einer Schicht aus Wachstumsmaterial nach einem der Ansprüche 1 bis 9 oder Aufbringen von Grasnarbe auf dieselbe.

## Revendications

1. Matériau de croissance pour une surface de gazon (1), lequel matériau comprend du sable, un support favorisant la croissance organique, et des fibres polymères élastomériques allongées, le matériau de croissance étant **caractérisé en ce qu'**il comprend en outre des fibres polymériques synthétiques allongées sensiblement rigides, et **en ce que** chacune des fibres rigides et des fibres élastomériques sont dispersées aléatoirement comme des fibres individuelles séparées dans le matériau de croissance, le matériau de croissance étant **caractérisé en ce que** le rapport entre les fibres élastomériques et les fibres polymériques rigides dans le matériau de croissance est compris entre 12 : 1 et 8 : 1.

2. Matériau de croissance selon la revendication 1, dans lequel les fibres élastomériques comprennent une ou plusieurs parmi :
(a) des fibres de poly(uréthane) ;
(b) des fibres de poly(uréthane) ayant une longueur dans la plage de 1 à 200 mm :
(c) des fibres de poly(uréthane) ayant une longueur dans la plage de 5 à 100 mm ;
(d) des fibres de poly(uréthane) modifié, par exemple de poly(uréthane)/poly(éthylène glycol) ; et
(e) des fibres d'élasthanne.

3. Matériau de croissance selon la revendication 1 ou la revendication 2, comprenant des fibres élastomériques qui ont une ou plusieurs des caractéristiques suivantes : sensiblement droites, sensiblement courbées, sensiblement hélicoïdales ou en spirale.

4. Matériau de croissance selon la revendication 1 ou la revendication 2, comprenant des fibres élastomériques qui comportent un ou plusieurs coudes.

5. Matériau de croissance selon la revendication 4, ayant une pluralité de coudes espacés aléatoirement.

6. Matériau de croissance selon les revendications 4 ou 5, dans lequel la direction de coudes adjacents est agencée aléatoirement.

7. Matériau de croissance selon la revendication 1 ou la revendication 2, comprenant des fibres élastomériques qui sont serties.

8. Matériau de croissance selon l'une quelconque des revendications précédentes, dans lequel le pourcentage de fibres élastomériques dans le matériau de croissance est compris dans la plage de 0,5 à 6 % en poids rapporté au poids total du matériau de croissance.

9. Matériau de croissance selon l'une quelconque des revendications précédentes, dans lequel le pourcentage de fibres élastomériques dans le matériau de croissance est compris dans la plage de 2 à 4 % en poids, rapporté au poids total de la composition.

10. Surface de gazon (1) **caractérisée en ce que** le gazon est mis à croître dans une couche de matériau de croissance selon l'une quelconque des revendications précédentes.

11. Surface de gazon (1) selon la revendication 10, comprenant une pelouse en herbe (2) combinée avec le matériau de croissance.

12. Surface de gazon (1) selon la revendication 11, comprenant une combinaison du support de croissance et de semences de gazon pour une croissance de germination et/ou des semences germées/ayant crû.

13. Procédé de formation d'une surface de gazon (1), **caractérisé par** le semis de semences de gazon dans, ou l'application de pelouse à, une couche de matériau de croissance selon l'une quelconque des revendications 1 à 9.
